# EUROPEAN PATENT APPLICATION

(11) **EP 4 708 286 A1**
(43) Date of publication of application: **11.03.2026**
(21) Application number: 24855612.8
(22) Date of filing: 05.08.2024
(51) Int. Cl.: G10L 15/22

(54) **SPEECH INTERACTION METHOD AND DEVICE, AND STORAGE MEDIUM**

(30) Priority: 22.08.2023 CN 202311065233
(71) Applicant: Huawei Technologies Co., Ltd., Shenzhen, Guangdong 518129 (CN)
(72) Inventor: GENG, Jie, Shenzhen, Guangdong 518129 (CN); XU, Ping, Shenzhen, Guangdong 518129 (CN); ZHAO, Wei, Shenzhen, Guangdong 518129 (CN); JIN, Hongbin, Shenzhen, Guangdong 518129 (CN); SUN, Sicong, Shenzhen, Guangdong 518129 (CN)
(74) Representative: Maiwald GmbH
(86) International application number: PCT/CN2024/109799
(87) International publication number: WO 2025/039886

(57) **Abstract**

This specification relates to the field of voice interaction technologies, is applied to the fields of intelligent vehicles, internet of vehicles, mobile terminals, and the like, and discloses a voice interaction method, a device, and a storage medium. The voice interaction method includes: when detecting a first voice command of a first user, first determining a screen corresponding to the first user, for example, a first screen, and then determining the first screen as a primary voice screen, and displaying a first voice interaction interface through the first screen; and in a process in which a vehicle-mounted device receives the first voice command, if detecting a second voice command issued by a second user, and determining a screen corresponding to the second user as another screen, for example, a second screen, determining the second screen as a secondary voice screen, displaying a second voice interaction interface through the second screen, and displaying, through the first screen, an interaction identifier indicating that there is another interacting user. Based on the foregoing solution, an advantage of a plurality of screens can be leveraged, multi-screen human-machine interaction can be implemented, and user experience can be effectively improved.

## Description

This application claims priority to Chinese Patent Application No. 2023110652335, filed with the China National Intellectual Property Administration on August 22, 2023 and entitled "VOICE INTERACTION METHOD, DEVICE, AND STORAGE MEDIUM", which is incorporated herein by reference in its entirety.

### TECHNICAL FIELD

This specification relates to the field of voice interaction technologies, and in particular, to a voice interaction method, a device, and a storage medium.

### BACKGROUND

Currently, voice assistants have been widely used in in-vehicle intelligent cockpits, and implement a plurality of voice interaction functions such as voice conversation, voice wakeup, and voice navigation. Generally, a user performs human-machine interaction through a primary screen at a driver seat.

Currently, with development of vehicles, in-vehicle systems develop from a single primary screen disposed at a driver seat to a plurality of screens. For example, in a five-seater vehicle, in addition to a primary screen disposed at a driver seat, screens are also disposed in front of a front passenger seat and a rear-row seat. This provides a hardware configuration for users to perform voice interaction through the plurality of screens in the in-vehicle system. However, how to design a manner of voice interaction between the users and the plurality of screens in the in-vehicle system to meet a user requirement and improve user experience is still an urgent problem to be resolved currently.

### SUMMARY

To resolve the foregoing problem, this specification provides a voice interaction method, a device, and a storage medium.

According to a first aspect, this specification provides a voice interaction method. The method includes: detecting a first voice command of a first user; determining a screen corresponding to a first location of the first user in a vehicle as a first screen, determining the first screen as a primary voice screen, and displaying, through the first screen, a first voice interaction interface corresponding to the first voice command; detecting a second voice command issued by a second user; and determining a screen corresponding to a second location of the second user in the vehicle as a second screen, determining the second screen as a secondary voice screen, displaying, through the second screen, a second voice interaction interface corresponding to the second voice command, and displaying a first interaction identifier on the first voice interaction interface, where the first interaction identifier indicates that the second user is currently interacting with the second screen.

In this specification, the foregoing method may be applied to a vehicle-mounted device. The vehicle-mounted device may be a vehicle or an intelligent vehicle, or may be an electronic device loaded on a vehicle or an intelligent vehicle. The first voice command may be a wakeup word, for example, Celia, or may be a specific voice command, for example, open the vehicle window. The first user may be a first speaking user mentioned below, and the second user may be a second speaking user mentioned below. The first location may be a seat that is of the first user in the vehicle and that is determined by the vehicle-mounted device based on a sound source location of the first voice command. The first screen may be a screen that corresponds to the first location and that is determined by the vehicle-mounted device based on a preset relationship between a seat and a screen. The first voice interaction interface may be a voice assistant interface.

It may be understood that, in this specification, when a user issues a voice interaction command, the vehicle-mounted device may detect, based on a sound source location, a seat of each user issuing the voice command in the vehicle, activate a corresponding bearer screen based on the distribution relationship between the screen and the seat in the vehicle, and display voice interaction content on the bearer screen.

In some embodiments, the first user may be a user who first issues a voice command in a wake-up process, for example, a user who first wakes up a voice assistant of a vehicle. In this case, a corresponding first screen activated by the first user may be determined as a primary voice screen, another screen is used as a secondary voice screen, and a first voice interaction interface may be displayed on the primary voice screen. If it is detected that there is a second user issuing a voice interaction command at the same time, a screen corresponding to the second user is a second screen, that is, a secondary voice screen, and a second voice interaction interface may be displayed on the second screen.

It may be understood that, in this specification, after a user activates a corresponding bearer screen, a voice interaction interface may be displayed, and voice command content of the corresponding user may be displayed on the voice interaction interface. Voice command content of a user interacting with the primary voice screen and an interaction identifier indicating that there is another user interacting with the secondary voice screen may be displayed on the primary voice screen. Voice command content of the user interacting with the secondary voice screen may be displayed on the secondary voice screen.

Based on the foregoing solution, voice interaction of different users may be borne by respective corresponding screens, and voice interaction content of the users may be displayed on the corresponding bearer screens, so that an advantage of a plurality of screens can be leveraged, multi-screen human-machine interaction can be implemented, and user experience can be effectively improved.

In a possible implementation, the first interaction identifier includes at least one of an interaction icon, a quantity of interacting persons, and an interaction location.

It may be understood that, in this specification, the first interaction identifier may be the interaction icon, to inform the first user that another person is currently performing voice interaction in the vehicle; may be the quantity of interacting persons, to display a quantity of persons currently performing voice interaction in the vehicle; or may be the interaction location, to display a seat of another user performing voice interaction in the vehicle.

In a possible implementation, the first voice interaction interface displays interaction content corresponding to the first voice command, and the second voice interaction interface displays interaction content corresponding to the second voice command.

In a possible implementation, detecting the second voice command issued by the second user includes: in a process of receiving the first voice command, detecting the second voice command issued by the second user.

It may be understood that, in this specification, in a process in which the first user speaks, the second user may issue a voice command at the same time, and interaction content corresponding to the voice command of the second user may be displayed on a bearer screen corresponding to the second user. That is, the voice interaction method mentioned in this specification supports simultaneous interaction of a plurality of persons, so that user experience is improved.

In some embodiments, the process of receiving the first voice command may indicate that a voice wakeup identifier of the first screen does not disappear or can indicate any scenario present before interaction between the first user and the first screen is completed.

In a possible implementation, the method further includes: in the process of receiving the first voice command, detecting a third voice command issued by a third user; and corresponding to a screen corresponding to a third location of the third user in the vehicle being the first screen, displaying, by the first voice interaction interface, interaction content corresponding to the third voice command.

It may be understood that, in this specification, in a process in which the first user interacts with the first screen, the third user may issue a voice command at the same time. If the vehicle-mounted device detects that the screen corresponding to a seat of the third user is also the first screen, the voice interaction interface of the first screen may display the voice interaction content of the third user at the same time, so that user interaction experience is improved.

In some embodiments, if the vehicle-mounted device simultaneously detects that there are a plurality of persons such as a fourth user or a fifth user performing voice interaction with the first screen, content of interaction with the plurality of persons such as the fourth user or the fifth user may be simultaneously displayed on the first screen.

In a possible implementation, the method further includes: in a process of receiving the second voice command, detecting a fourth voice command issued by the fourth user; and corresponding to a screen corresponding to a fourth location of the fourth user in the vehicle being the second screen, displaying, by the second voice interaction interface, a second interaction identifier, where the second interaction identifier indicates a quantity of persons interacting with the second screen.

It may be understood that, in this specification, in a process in which the second user interacts with the second screen, the fourth user may issue a voice command at the same time. If the vehicle-mounted device detects that the screen corresponding to a seat of the fourth user is also the second screen, the voice interaction interface of the second screen may display the second interaction identifier. The second interaction identifier may be a quantity of persons currently interacting with the second screen.

In a possible implementation, the method further includes: The second voice interaction interface displays interaction content corresponding to the fourth voice command.

It may be understood that, in this specification, in the process in which the second user interacts with the second screen, the fourth user may issue a voice command at the same time. If the vehicle-mounted device detects that the screen corresponding to the seat of the fourth user is also the second screen, the voice interaction interface of the second screen may display the voice interaction content of the fourth user at the same time.

In a possible implementation, the method further includes: The second voice interaction interface further displays a third interaction identifier, where the third interaction identifier indicates that the first user is currently interacting with the first screen.

It may be understood that, in this specification, when the first user and the second user perform interaction at the same time, and the first screen corresponding to the first user is different from the second screen corresponding to the second user, the interaction identifier may be displayed on the second screen, to inform the second user that a plurality of persons are currently performing voice interaction in the vehicle.

In some embodiments, the third interaction identifier may be one or more of an interaction icon, a quantity of interacting persons, or an interaction location.

In a possible implementation, the method includes: determining the first location of the first user in the vehicle based on a sound source location of the first voice command, and determining the second location of the second user in the vehicle based on a sound source location of the second voice command; and based on a preset relationship between a location and a screen, determining the screen corresponding to the first location as the first screen corresponding to the first user, and determining the screen corresponding to the second location as the second screen corresponding to the second user.

It may be understood that, in this embodiment of this specification, sound source positioning may be performed on the voice command to determine a seat of a user who speaks, and the vehicle-mounted device may determine, according to a bearer screen preset rule formulated based on distribution of screens and seats in the vehicle, a corresponding bearer screen during voice interaction of the user.

In a possible implementation, the method includes: if the screen corresponding to the first location of the first user in the vehicle is determined as a third screen, and the third screen is in an exception state, determining a replacement screen corresponding to the third screen, according to a preset screen replacement rule, as the first screen corresponding to the first user.

It may be understood that, in this specification, the vehicle-mounted device may formulate a transfer rule based on distribution of screens and seats in the vehicle. When some screens are in an exception state, for example, when the screen is turned off, a screen corresponding to voice interaction of the user may be replaced with another screen. In some embodiments, the screen replacement rule may be setting a fixed replacement screen corresponding to each screen. In some embodiments, the screen replacement rule may alternatively be using an available screen currently closest to the user as a corresponding replacement screen. In this way, bearer screens for different seats to perform interaction can be determined, and a most convenient screen can be provided for a passenger at each seat, so that user experience is improved.

In a possible implementation, the method includes: command processing for the first voice command by the vehicle-mounted device takes precedence over command processing for the second voice command by the vehicle-mounted device. The command processing includes at least one of broadcast processing, response processing, and execution processing.

It may be understood that, in this specification, a priority of processing a voice command of a first speaking user by the vehicle-mounted device may be set to be higher than that of processing a voice command of another speaking user in terms of response, broadcasting, and execution. This can avoid confusion of voice interaction in the conventional technology, for example, a case in which there are a plurality of voice broadcasts at the same time, affecting user interaction experience.

According to a second aspect, this specification provides an electronic device, including a memory and a processor. The memory is configured to store instructions executed by one or more processors of the electronic device. The processor is one of the one or more processors of the electronic device, and is configured to perform the voice interaction method mentioned in this specification.

According to a third aspect, this specification provides a vehicle-mounted device, including a memory and a processor. The memory is configured to store instructions executed by one or more processors of the vehicle-mounted device. The processor is one of the one or more processors of the vehicle-mounted device, and is configured to perform the voice interaction method mentioned in this specification.

According to a fourth aspect, this specification provides an in-vehicle module, including a processor and a memory. The memory stores a computer program, and the processor executes the computer program, to enable the in-vehicle module to perform the voice interaction method mentioned in this specification.

According to a fifth aspect, this specification provides a readable storage medium. The readable storage medium stores instructions. When the instructions are executed on an electronic device, the electronic device is enabled to perform the voice interaction method mentioned in this specification.

### BRIEF DESCRIPTION OF DRAWINGS

FIG. 1 is a diagram of a scenario in which a plurality of screens are configured in a vehicle according to some embodiments of this specification;
FIG. 2A is a diagram of a scenario of a preemptive strategy for voice interaction according to some embodiments of this specification;
FIG. 2B is a diagram of a screen of a preemptive strategy for voice interaction according to some embodiments of this specification;
FIG. 3A is a diagram of a scenario of a concurrent strategy for voice interaction according to some embodiments of this specification;
FIG. 3B is a diagram of a screen of a concurrent strategy for voice interaction according to some embodiments of this specification;
FIG. 4A is a diagram of a 1^{st} screen bearing manner according to some embodiments of this specification;
FIG. 4B is a diagram of a 2^{nd} screen bearing manner according to some embodiments of this specification;
FIG. 4C is a diagram of a 3^{rd} screen bearing manner according to some embodiments of this specification;
FIG. 4D is a diagram of a 4^{th} screen bearing manner according to some embodiments of this specification;
FIG. 5A is a diagram of a scenario of a 1^{st} mode for interaction using a primary voice screen according to some embodiments of this specification;
FIG. 5B is a diagram of a scenario of a 2^{nd} mode for interaction using a primary voice screen according to some embodiments of this specification;
FIG. 5C is a diagram of a scenario of a mode for interaction using a secondary voice screen according to some embodiments of this specification;
FIG. 6 is a schematic flowchart of voice interaction according to some embodiments of this specification;
FIG. 7 is a schematic flowchart of a mode for interaction using a primary voice screen according to some embodiments of this specification;
FIG. 8 is a schematic flowchart of a mode for interaction using a secondary voice screen according to some embodiments of this specification; and
FIG. 9 is a diagram of a vehicle architecture according to some embodiments of this specification.

### DESCRIPTION OF EMBODIMENTS

Illustrative embodiments of this specification include but are not limited to a voice interaction method, a device, and a storage medium.

The following briefly describes an application scenario of the method provided in embodiments of this specification.

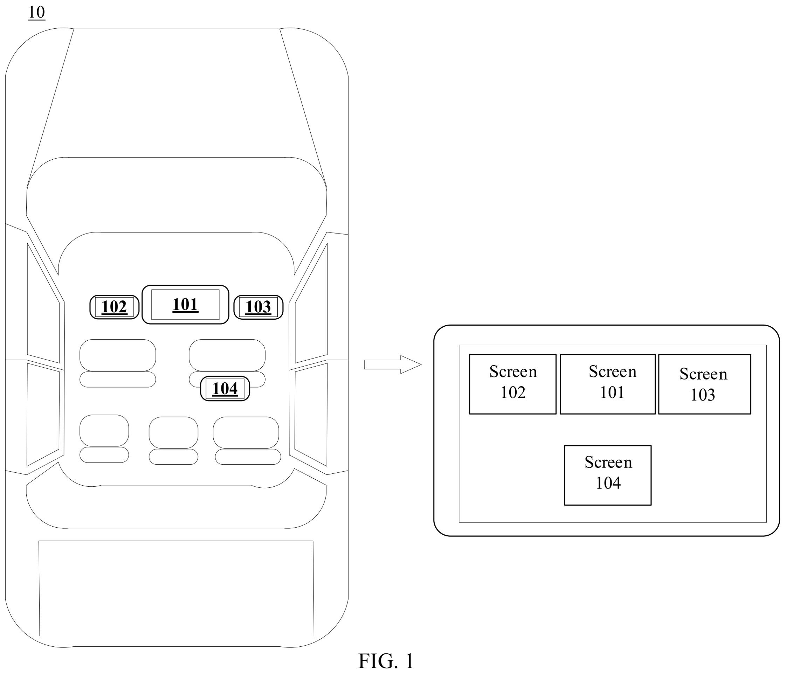

Currently, some vehicles provide multi-screen human-machine interaction for users. As shown in FIG. 1, a central display screen 101, a screen 102 configured for a driver seat, a screen 103 configured for a front passenger seat, and a screen 104 configured for a rear seat are configured in a vehicle 10. Users at different seats may separately initiate voice interaction with a voice assistant on corresponding screens, to implement independent interaction.

The following describes scenarios in which a plurality of persons perform voice interaction in some embodiments.

The following first describes a scenario in which voice interaction is performed based on a preemptive strategy.

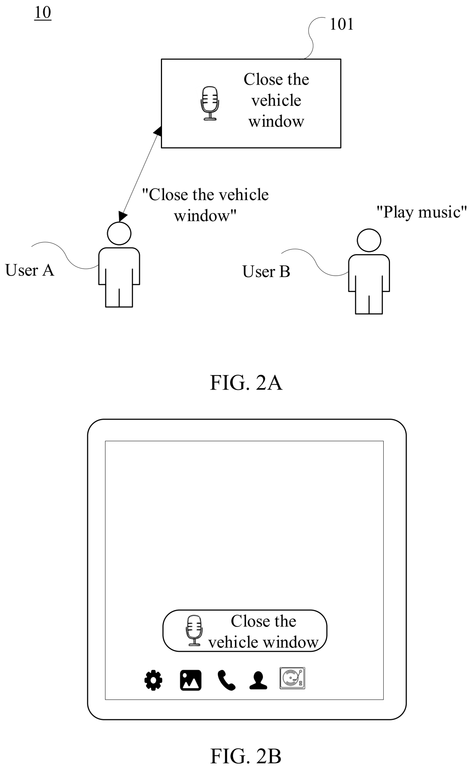

The preemptive strategy for voice interaction means that, after the voice assistant is woken up at one seat, a user at another seat cannot initiate voice interaction with the voice assistant at the same time. Only when the voice assistant ends a current interaction process, the user at another seat can seize an interaction right by using a wakeup word. As shown in FIG. 2A, in the vehicle 10, a user A issues a voice command "Close the vehicle windows" to the voice assistant. In this case, as shown in FIG. 2B, the voice assistant of the vehicle 10 may be woken up, and voice interaction for "Close the vehicle windows" may be displayed on a central display screen 101. If a user B issues a voice command "Play music" at this time, because the user A has woken up and occupied the voice assistant, the voice assistant does not respond to the voice command of the user B. That is, the method cannot support simultaneous interaction of a plurality of persons, resulting in poor user experience.

The following describes a scenario in which voice interaction is performed based on a concurrent strategy.

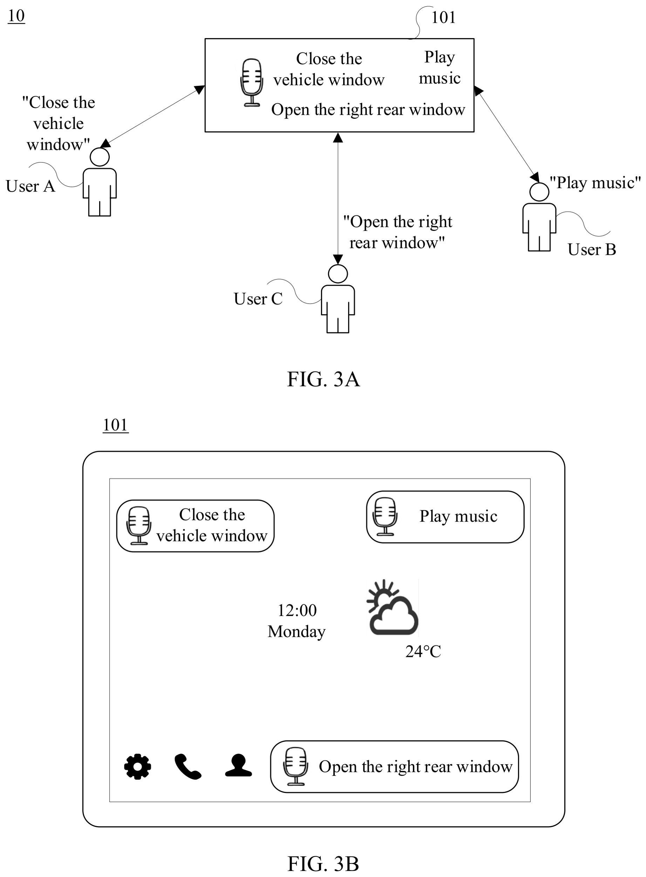

The concurrent strategy for voice interaction means that, when a plurality of persons issue commands to a voice assistant at the same time, a system displays the plurality of commands on a same screen, and marks the commands at different locations. As shown in FIG. 3A, in the vehicle 10, a user A issues a voice command "Close the vehicle window", and a user B issues a voice command "Play music", and at the same time, a user C issues a voice command "Open the right rear window". In this case, as shown in FIG. 3B, a vehicle-mounted device may display a plurality of voice commands at corresponding locations of the central display screen 101 together, and perform voice interaction at the same time. That is, although the method can support simultaneous interaction of a plurality of persons, user interaction content is still displayed on only one screen, and interaction between a plurality of screens and the plurality of persons cannot be implemented. This also affects user interaction experience.

Based on this, embodiments of this specification provide a voice interaction method. A vehicle-mounted device may first preset, according to a preset rule, bearer screens for users at different seats to perform human-machine interaction. Then, when detecting a voice command of the user, the vehicle-mounted device may determine, based on a seat corresponding to a sound-making location of the user, the bearer screen corresponding to the user. When it is detected that there are a plurality of persons performing interaction at the same time, voice interaction content of the corresponding user may be displayed through the corresponding bearer screen. In this way, a most convenient bearer screen can be provided for a user at each seat, an advantage of a plurality of screens can be leveraged, multi-screen human-machine interaction can be implemented, and user experience can be effectively improved.

It may be understood that, that the plurality of persons perform interaction at the same time mentioned in this specification means that, before interaction of a 1^{st} user is completed, for example, before a voice wakeup identifier disappears, or in a process of receiving a voice command by a vehicle-mounted device, another user issues an interaction command.

In addition, in some embodiments, in a scenario in which the plurality of persons perform interaction at the same time, in addition to the interaction content of the corresponding user, another interaction identifier may also be displayed on the bearer screen, so that the user corresponding to the bearer screen can learn that the plurality of persons are currently performing interaction. For example, in some embodiments, the interaction identifier may be a quantity of persons interacting with a current screen, or may be a voice interaction icon indicating that there is another person interacting with another screen.

For example, in some embodiments, when detecting that a first speaking user activates a voice assistant of a corresponding bearer screen (for example, a first screen) to perform voice interaction, the vehicle-mounted device may display voice interaction content corresponding to the current first speaking user. In this case, if the vehicle-mounted device detects that there is a second speaking user interacting with the current voice screen, content of the second speaking user may be displayed on the current voice screen at the same time. If the vehicle-mounted device detects that there is a second speaking user interacting with another voice screen (for example, a second screen), an interaction icon may be displayed on the voice screen corresponding to the current first speaking user, to inform the first speaking user that a plurality of persons are currently performing interaction. At the same time, content of voice interaction with the second speaking user may be displayed on the voice screen corresponding to the second speaking user. In this case, if there is a third speaking user interacting with the voice screen corresponding to the second speaking user, a quantity of persons performing voice interaction with the voice screen may be displayed on the voice screen.

In some embodiments, the bearer screen corresponding to the first speaking user may be further defined as a primary voice screen, and another screen may be defined as a secondary voice screen. Voice interaction content corresponding to a user whose bearer screen is the primary voice screen may be displayed on the primary voice screen. When there is another user performing voice interaction with the secondary voice screen at the same time, the interaction icon may be displayed on the primary voice screen, to indicate that a plurality of persons are currently performing interaction, and content of current voice interaction with the secondary voice screen (that is, interaction content corresponding to a user whose bearer screen is the secondary voice screen) and a quantity of persons interacting with the secondary voice screen may be displayed on the secondary voice screen.

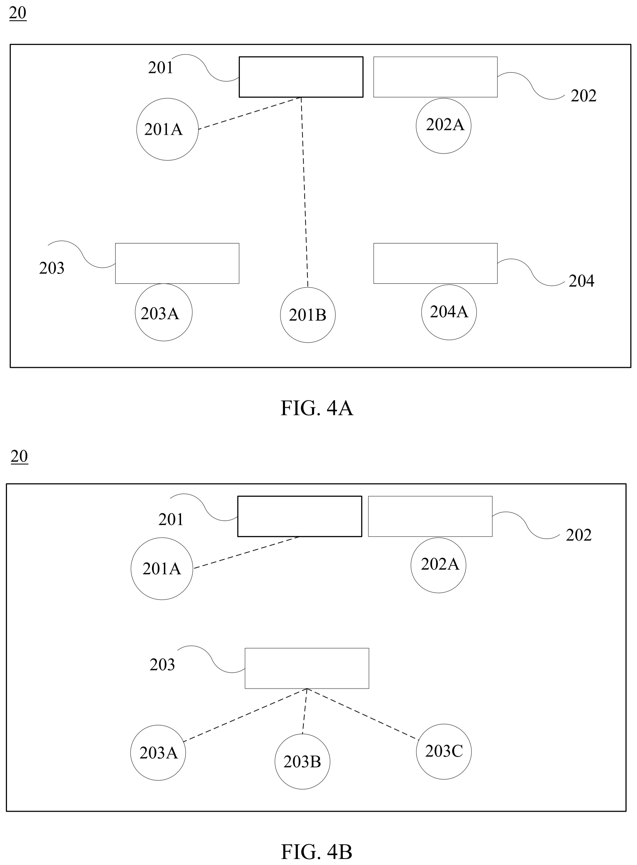

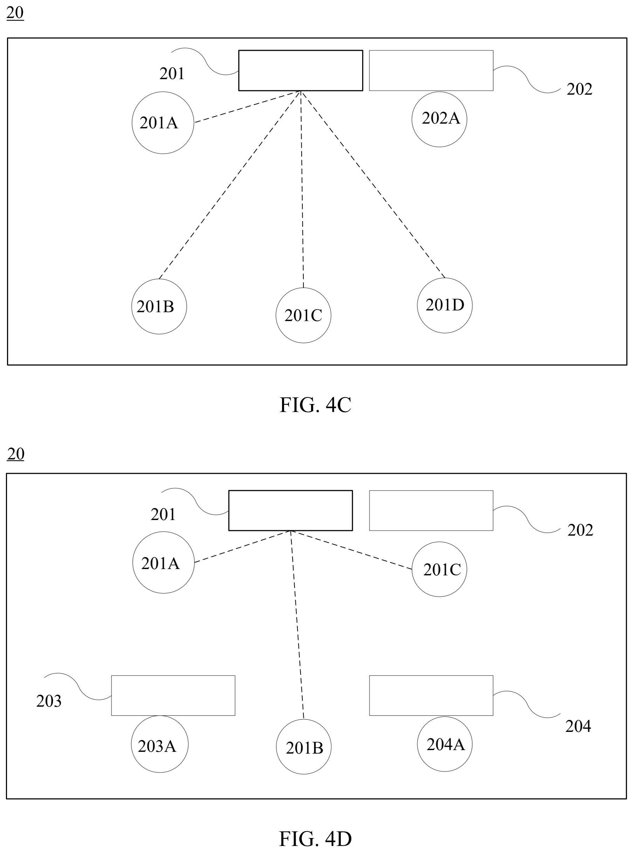

In some embodiments, the vehicle-mounted device may pre-determine different preset rules based on distribution of screens and seats in a vehicle, to determine bearer screens for users at different seats during interaction. For example, as shown in FIG. 4A, a total of four screens are configured in a five-seater vehicle 20: a screen 201, a screen 202, a screen 203, and a screen 204. A bearer screen for a driver seat 201A may be determined as the screen 201, a bearer screen for a front passenger seat 202A may be determined as the screen 202, a bearer screen for a second-row left location 203A may be determined as the screen 203, a bearer screen for a second-row middle location 201B may be determined as the screen 201, and a bearer screen for a second-row right location 204A may be determined as the screen 204. For another example, as shown in FIG. 4B, a total of three screens are configured in a five-seater vehicle 20: a screen 201, a screen 202, and a screen 203. A bearer screen for a driver seat 201A may be determined as the screen 201 according to a proximity principle, a bearer screen for a front passenger seat 202A may be determined as the screen 202 according to the proximity principle, and a bearer screen for a second-row left location 203A, a second-row middle location 203B, and a second-row right location 203C may be determined as the screen 203. For another example, as shown in FIG. 4C, a total of two screens are configured in a five-seater vehicle 20: a screen 201 and a screen 202. A bearer screen for a driver seat 201A may be determined as the screen 201 according to a proximity principle, a bearer screen for a front passenger seat 202A may be determined as the screen 202 according to the proximity principle, and a bearer screen for a second-row left location 201B, a second-row middle location 201C, and a second-row right location 201D may be determined as the screen 201. For another example, as shown in FIG. 4D, in a vehicle 20 in which four screens are configured, with reference to a preset rule for the bearer screens of the vehicle 20 shown in FIG. 4A, if the screen 202 is in an off mode in this case, the bearer screen for the front passenger seat 201C may be re-determined as the screen 201 according to a transfer rule (that is, a preset screen replacement rule). In this way, the bearer screens for different seats to perform interaction can be determined according to the preset rule, and the most convenient screen can be provided for the user at each seat, so that user experience is improved.

In some embodiments, the vehicle-mounted device may determine the primary voice screen and the secondary voice screen based on a sequence in which users initiate voice interaction. The first speaking user activates the voice assistant of the corresponding bearer screen, and the vehicle-mounted device determines the screen as the primary voice screen, and determines another screen as the secondary voice screen. A priority of the primary voice screen may be set to be higher than that of the secondary voice screen in terms of response, broadcasting, and execution. After voice interaction ends, the primary voice screen and the secondary voice screen are canceled, and the primary voice screen and the secondary voice screen are re-determined based on a sequence in which next voice interaction is initiated.

In this way, according to the voice interaction method in this specification, a voice interaction priority and a screen priority can be determined, the advantage of a plurality of screens can be leveraged, voice interaction on different bearer screens is non-interfering, independent multi-screen human-machine interaction is implemented, and user experience is effectively improved.

In some embodiments, a sound sensor in the vehicle may collect sound and convert a sound signal into a digital signal. The vehicle-mounted device may identify the digital signal, for example, detect a digital signal corresponding to a wakeup word (for example, open the vehicle window). In addition, the sound sensor may perform sound source positioning on the sound to determine a seat of a user who speaks. The vehicle-mounted device may activate, according to a bearer screen preset rule, a voice assistant of a corresponding bearer screen. The voice assistant in a wake-up mode may keep in a listening state and wait for a command of the user.

In some embodiments, the sound sensor in the vehicle may collect sound and convert the sound into a digital signal. The vehicle-mounted device analyzes and processes the digital signal to identify text information in the digital signal, and displays the text information on a screen.

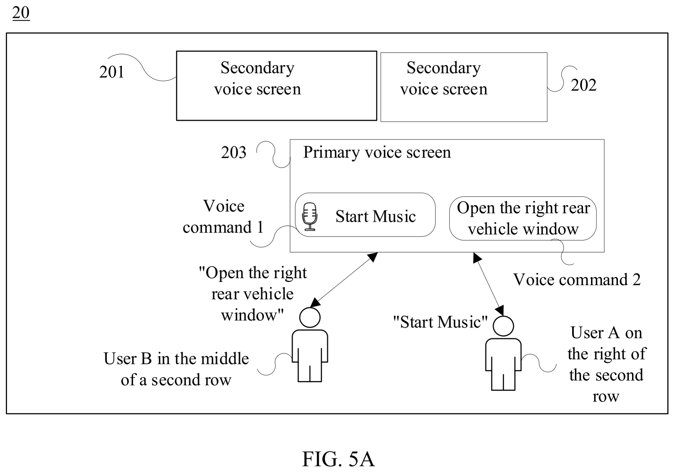

With reference to FIG. 5A, the following uses the vehicle 20 as an example to describe a scenario in which the bearer screen corresponding to the second speaking user is the primary voice screen.

For example, as shown in FIG. 5A, three screens are configured in the vehicle 20: the screen 201, the screen 202, and the screen 203. With reference to a preset rule for the bearer screens of the vehicle 20 shown in FIG. 4B, in a first time period, when the vehicle-mounted device detects that a user A on the right of a second row first issues a voice command "Start Music" and activates the corresponding bearer screen 203, the screen 203 may be determined as the primary voice screen, the screen 201 and the screen 202 are determined as secondary voice screens, and the voice command 1 "Start Music" of the user A on the right of the second row may be displayed on the screen 203. In this case, if there is the second speaking user, that is, a user B in the middle of the second row, issuing a voice command "Open the right rear window" at the same time, and a bearer screen with which the user B in the middle of the second row performs voice interaction is also the screen 203, the voice command 2 "Open the right rear window" of the user B in the middle of the second row may be displayed on the screen 203 at the same time. In some embodiments, a priority of the voice command 1 is higher than that of the voice command 2 in terms of response and broadcasting. For example, the vehicle-mounted device may first broadcast the voice command 1 "Start Music", and then broadcast the voice command 2 "Open the right rear window". In this way, the voice interaction priority can be determined, and user experience can be improved.

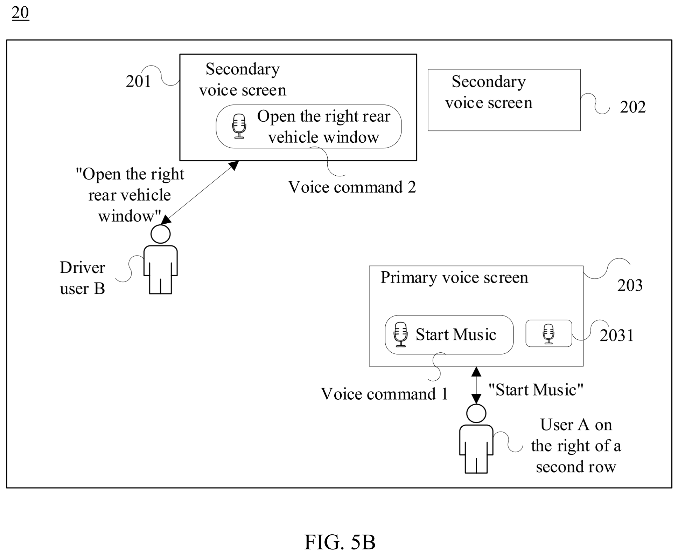

With reference to FIG. 5B, the following uses the vehicle 20 as an example to describe a scenario in which the bearer screen corresponding to the second speaking user is the secondary voice screen.

For example, as shown in FIG. 5B, three screens are configured in the vehicle 20: the screen 201, the screen 202, and the screen 203. With reference to a preset rule for the bearer screens of the vehicle 20 shown in FIG. 4B, in a first time period, when the vehicle-mounted device detects that a user A on the right of a second row first issues a voice command "Start Music" and activates the corresponding bearer screen 203, the screen 203 may be determined as the primary voice screen, the screen 201 and the screen 202 are determined as secondary voice screens, and the voice command 1 "Start Music" of the user A on the right of the second row may be displayed on the screen 203. In this case, if there is the second speaking user, that is, a driver user B, issuing a voice command "Open the right rear window" at the same time, and the vehicle-mounted device detects that a bearer screen corresponding to the driver user B is the screen 201, an interaction icon 2031 may be displayed on the screen 203, to remind the first speaking user, that is, the user A on the right of the second row, that a plurality of persons are currently performing interaction, and the voice command 2 "Open the right rear window" of the driver user B may be displayed on the screen 201. A priority of the screen 203 is higher than that of the screen 201 in terms of response and broadcasting. For example, the vehicle-mounted device may first broadcast the voice command 1 "Start Music", and then broadcast the voice command 2 "Open the right rear window". In this way, the voice interaction priority and the screen priority can be determined, the independent multi-screen human-machine interaction can be implemented, and user experience can be improved.

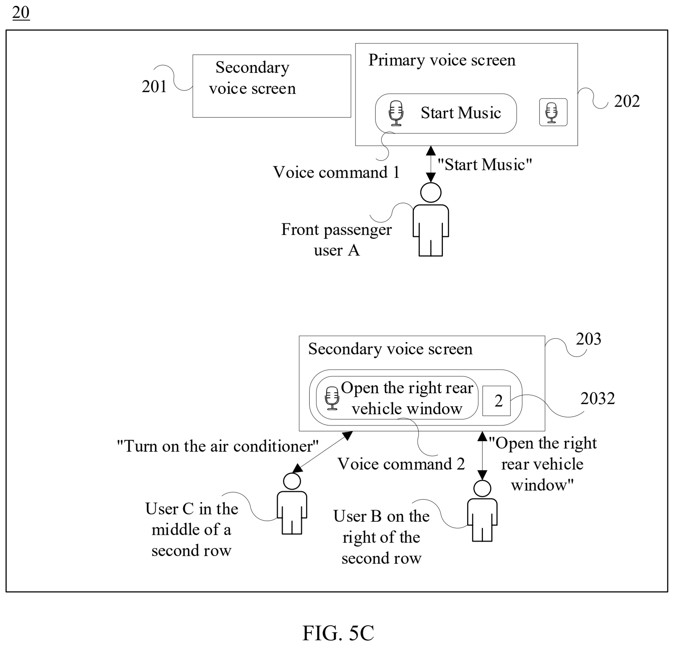

With reference to FIG. 5C, the following uses the vehicle 20 as an example to describe a scenario in which a bearer screen corresponding to the third speaking user is the secondary voice screen.

For example, as shown in FIG. 5C, three screens are configured in the vehicle 20: the screen 201, the screen 202, and the screen 203. With reference to a preset rule for the bearer screens of the vehicle 20 shown in FIG. 4B, when the first speaking user, that is, a front passenger user A, activates the screen 202 by using a voice command 1 "Start Music", the screen 202 may be determined as the primary voice screen, and the screen 201 are the screen 203 are determined as secondary voice screens. If there is the second speaking user, that is, a user B on the right of a second row, activating the screen 203 by using a voice command 2 "Open the right rear window" at the same time, and if the vehicle-mounted device simultaneously detects that there is the third speaking user, that is, a user C in the middle of the second row, issues a voice command "Turn on the air conditioner", and a bearer screen for voice interaction with the user C in the middle of the second row is also the screen 203, a display box 2032 may pop up on the screen 203, displaying a quantity of persons currently interacting with the screen 203, that is, "2". In this way, an interaction process of the second speaking user is not interfered, the independent multi-screen human-machine interaction is implemented, and user experience is effectively improved.

In this way, according to the voice interaction method in this specification, the voice interaction priority and the screen priority can be determined, the advantage of the plurality of screens can be leveraged, and user experience can be improved.

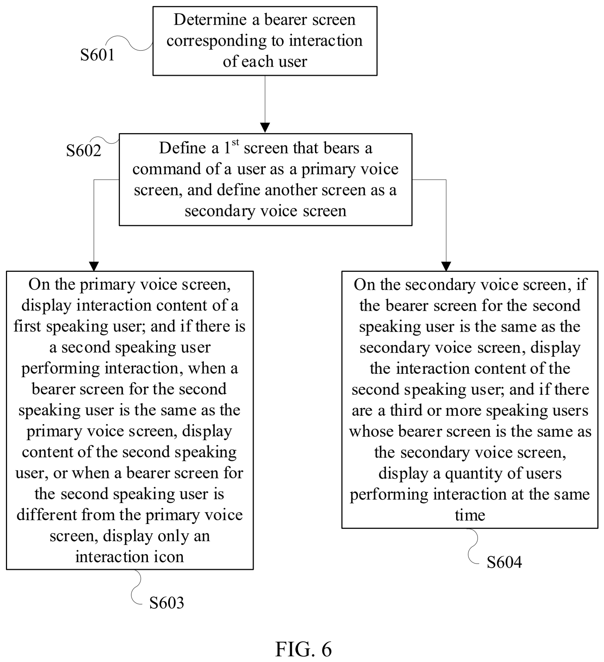

The following describes the voice interaction method in embodiments of this specification with reference to the schematic flowchart shown in FIG. 6. The voice interaction method may be performed by a vehicle-mounted device. As shown in FIG. 6, the method specifically includes the following steps.

S601: Determine a bearer screen corresponding to interaction of each user.

It may be understood that, in this embodiment of this specification, in a vehicle in which a plurality of screens are configured, different preset rules need to be pre-determined based on distribution of screens and seats in the vehicle, to determine bearer screens for users at different seats during interaction. As shown in FIG. 4A, FIG. 4B, and FIG. 4C, vehicles with different configurations have different preset rules. For example, bearer screens for different seats may be determined, according to a proximity principle, as screens closest to the seats. For another example, as shown in FIG. 4D, when some screens are in an off mode, a transfer rule (that is, a screen replacement rule) may be formulated, to re-determine the bearer screens corresponding to different seats. For example, after bearer screens corresponding to some seats are turned off, the bearer screens for the seats may be re-determined as a central display screen. In some embodiments, the screen replacement rule may be setting a fixed replacement screen corresponding to each screen. In some embodiments, the screen replacement rule may alternatively be using an available screen currently closest to a user as a corresponding replacement screen. The bearer screen preset rule is not limited in this embodiment of this specification.

In some embodiments, a sound sensor in the vehicle-mounted device may collect sound and convert a sound signal into a digital signal. The vehicle-mounted device may identify the digital signal, for example, detect a digital signal corresponding to a wakeup word (for example, open the vehicle window). In addition, the sound sensor may perform sound source positioning on the sound to determine a seat of a user who speaks. The vehicle-mounted device may activate, according to the bearer screen preset rule, a voice assistant of a corresponding bearer screen. The voice assistant in a wake-up mode may keep in a listening state and wait for a command of the user.

S602: Define a 1^{st} screen that bears the command of the user as a primary voice screen, and define another screen as a secondary voice screen.

It may be understood that, in this embodiment of this specification, the user may wake up, by using the wakeup word (for example, open the vehicle window), a voice assistant of a current bearer screen for the seat. If the vehicle-mounted device detects that a user who currently initiates voice interaction is a first speaking user, the vehicle-mounted device may determine a bearer screen for the user to perform interaction as the primary voice screen, and determine another screen as the secondary voice screen.

In some embodiments, after voice interaction ends, for example, a voice wakeup identifier disappears, the primary voice screen and the secondary voice screen may be canceled, and the primary voice screen and the secondary voice screen are re-determined based on a sequence in which next voice interaction is initiated.

S603: On the primary voice screen, display interaction content of the first speaking user; and if there is a second speaking user performing interaction, when a bearer screen for the second speaking user is the same as the primary voice screen, display content of the second speaking user, or when a bearer screen for the second speaking user is different from the primary voice screen, display only an interaction icon.

It may be understood that, in this embodiment of this specification, after the vehicle-mounted device determines the bearer screen corresponding to the first speaking user as the primary voice screen, the content of interaction with the first speaking user may be displayed on the primary voice screen. In this case, if the vehicle-mounted device detects that there is the second speaking user activating the corresponding bearer screen, and the bearer screen is the primary voice screen, the content of the second speaking user may be displayed on the primary voice screen at the same time. If the vehicle-mounted device detects that the bearer screen corresponding to the second speaking user is the secondary voice screen, the interaction icon, for example, an icon 2031 shown in FIG. 5B, may be displayed on the primary voice screen, to inform the first speaking user that a plurality of persons are currently performing voice interaction in the vehicle.

In some embodiments, in addition to the interaction icon, an interaction location corresponding to a speaking user whose bearer screen is the secondary voice screen, a quantity of currently interacting persons, and the like may also be displayed on the primary voice screen. This is not limited in this specification.

S604: On the secondary voice screen, if the bearer screen for the second speaking user is the same as the secondary voice screen, display the interaction content of the second speaking user; and if there are a third or more speaking users whose bearer screen is the same as the secondary voice screen, display a quantity of users performing interaction at the same time.

It may be understood that, in this embodiment of this specification, when the vehicle-mounted device detects that the bearer screen corresponding to the second speaking user is the secondary voice screen, current content of interaction with the second speaking user may be displayed on the secondary voice screen. In this case, if the vehicle-mounted device detects that there is the third speaking user activating the corresponding bearer screen, and the bearer screen corresponding to the third speaking user is the secondary voice screen, a quantity of persons interacting with the secondary voice screen may be displayed on the secondary voice screen, as shown in a display box 2032 in FIG. 5C, so that an interaction process of the second speaking user is not interfered.

In some embodiments, content of interaction between the third speaking user and the secondary voice screen may also be displayed on the secondary voice screen. The interaction icon may also be displayed on the secondary voice screen, to inform the second speaking user that the first speaking user is currently interacting with the primary voice screen. This is not limited in this specification.

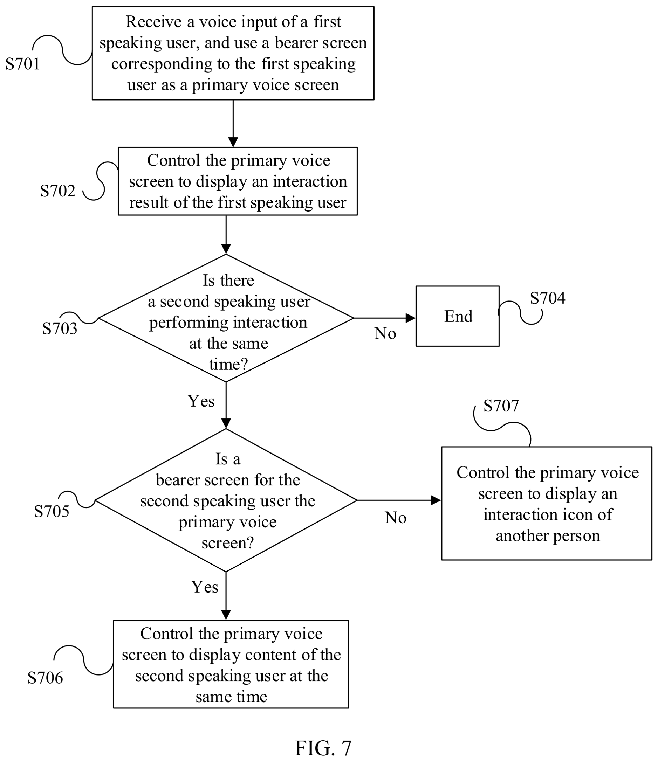

The following describes in detail an interaction mode of a primary voice screen in the voice interaction method in embodiments of this specification with reference to the schematic flowchart shown in FIG. 7. Specifically, the method may be performed by a vehicle-mounted device, and the method includes the following steps.

S701: Receive a voice input of a first speaking user, and use a bearer screen corresponding to the first speaking user as the primary voice screen.

It may be understood that, in this embodiment of this specification, after detecting a wakeup word, the vehicle-mounted device may wake up, according to a bearer screen preset rule, the bearer screen corresponding to the first speaking user. A voice assistant of the bearer screen in a wake-up mode may keep in a listening state and wait for a command of the user. In addition, the vehicle-mounted device may determine the bearer screen corresponding to the first speaking user as the primary voice screen, and determine another screen as a secondary voice screen.

S702: Control the primary voice screen to display an interaction result of the first speaking user.

It may be understood that, in this embodiment of this specification, a sound sensor in the vehicle-mounted device may collect a voice of the first speaking user and convert a sound signal into a digital signal. The vehicle-mounted device may analyze and process the digital signal to identify text information in the digital signal, and display the text information on the primary voice screen.

S703: Determine whether there is a second speaking user performing interaction at the same time; and if yes, proceed to S705; or if no, proceed to S704.

It may be understood that, in this embodiment of this specification, when the primary voice screen bears human-machine interaction, the vehicle-mounted device may determine whether there is the second speaking user performing voice interaction with a bearer screen at the same time. If there is the second speaking user performing voice interaction at the same time, the process proceeds to S705 to determine whether the bearer screen corresponding to the second speaking user is the primary voice screen. If only the first speaking user currently performs voice interaction, that is, there is no second speaking user, the process proceeds to S704, to be specific, a voice interaction process directly ends after interaction of the first speaking user ends.

In some embodiments, performing interaction at the same time means that, before the interaction of the first speaking user is completed, for example, before a voice wakeup identifier disappears, or in a process of receiving a voice command by the vehicle-mounted device, the second speaking user issues an interaction command.

S704: End.

It may be understood that, in this embodiment of this specification, when the first speaking user interacts with the primary voice screen, if the vehicle-mounted device does not detect that there is the second speaking user performing interaction at the same time, the voice interaction process directly ends after the interaction of the first speaking user ends.

S705: Determine whether the bearer screen for the second speaking user is the primary voice screen; and if yes, proceed to S706; or if no, proceed to S707.

It may be understood that, in this embodiment of this specification, when the first speaking user interacts with the primary voice screen, if the vehicle-mounted device detects that there is the second speaking user interacting with the vehicle-mounted screen at the same time, the vehicle-mounted device needs to determine, according to the preset rule, whether the bearer screen corresponding to the second speaking user is the primary voice screen. If the bearer screen corresponding to the second speaking user is the primary voice screen, the process proceeds to S706 to display content of the second speaking user at the same time on the primary voice screen. If the bearer screen corresponding to the second speaking user is not the primary voice screen but another secondary voice screen, the process proceeds to S707 to display the interaction icon on the primary voice screen.

S706: Control the primary voice screen to display the content of the second speaking user at the same time.

It may be understood that, in this embodiment of this specification, if the vehicle-mounted device detects that the bearer screen corresponding to the second speaking user is the primary voice screen, the vehicle-mounted device may identify text information in a voice command, and display the text information on the primary voice screen.

In some embodiments, when the primary voice screen bears the human-machine interaction, if the vehicle-mounted device simultaneously detects that there are a plurality of persons such as a third speaking user or a fourth speaking user performing voice interaction with the primary voice screen, content of interaction with the plurality of persons such as the third speaking user or the fourth speaking user may be simultaneously displayed on the primary voice screen.

S707: Control the primary voice screen to display an interaction icon of another person.

It may be understood that, in this embodiment of this specification, if the vehicle-mounted device detects that the bearer screen corresponding to the second speaking user is not the primary voice screen but the another secondary voice screen, the interaction icon, for example, an icon 2031 in FIG. 5B, may be displayed on the primary voice screen, to inform the first speaking user that a plurality of persons are currently performing voice interaction in a vehicle.

In some embodiments, when the primary voice screen bears the human-machine interaction, if the vehicle-mounted device simultaneously detects that there are a plurality of persons performing voice interaction with other secondary voice screens, only one interaction icon is displayed on the primary voice screen.

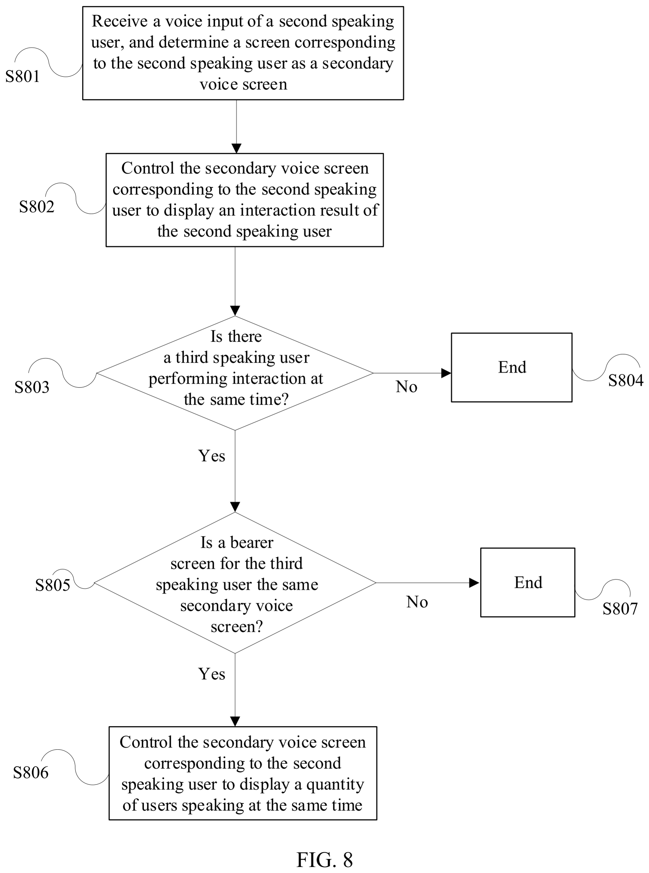

The following describes in detail an interaction mode of a secondary voice screen in embodiments of this specification with reference to the schematic flowchart shown in FIG. 8. Specifically, the method may be performed by a vehicle-mounted device, and the method includes the following steps.

S801: Receive a voice input of a second speaking user, and determine a screen corresponding to the second speaking user as the secondary voice screen.

It may be understood that, in this embodiment of this specification, after a first speaking user activates a voice assistant of a corresponding bearer screen, the vehicle-mounted device may determine the corresponding bearer screen as a primary voice screen, and determine another screen as the secondary voice screen. In this case, if the vehicle-mounted device detects that there is the second speaking user issuing a voice command at the same time, and the vehicle-mounted device detects, according to a bearer screen preset rule, that the bearer screen corresponding to the second speaking user is another secondary voice screen, the vehicle-mounted device may wake up the secondary voice screen corresponding to the second speaking user. A voice assistant of the secondary voice screen that is in a wake-up mode and that corresponds to the second speaking user may keep in a listening state and wait for a command of a user.

S802: Control the secondary voice screen corresponding to the second speaking user to display an interaction result of the second speaking user.

It may be understood that, in this embodiment of this specification, a sound sensor in the secondary voice screen corresponding to the second speaking user may collect a voice of the second speaking user and convert a sound signal into a digital signal. The vehicle-mounted device may analyze and process the digital signal to identify text information in the digital signal, and display the text information on the secondary voice screen corresponding to the second speaking user.

S803: Determine whether there is a third speaking user performing interaction at the same time; and if yes, proceed to S805; or if no, proceed to S804.

It may be understood that, in this embodiment of this specification, when the second speaking user performs voice interaction with the secondary voice screen, the vehicle-mounted device may determine whether there is, at this time, the third speaking user performing voice interaction with a bearer screen at the same time. If there is the third speaking user performing voice interaction at the same time, the process proceeds to S805 to determine whether the bearer screen corresponding to the third speaking user and the bearer screen corresponding to the second speaking user are a same secondary voice screen. If there is no third speaking user, the process proceeds to S804, to be specific, a voice interaction process directly ends after interaction of the second speaking user ends.

In some embodiments, performing interaction at the same time means that, before the interaction of the second speaking user is completed, for example, before a voice wakeup identifier disappears, or in a process of receiving the voice command by the vehicle-mounted device, the third speaking user issues an interaction command.

S804: End.

It may be understood that, in this embodiment of this specification, if the vehicle-mounted device does not detect that there is the third speaking user performing interaction at the same time, the voice interaction process directly ends after the interaction of the second speaking user ends.

S805: Determine whether the bearer screen for the third speaking user is the same secondary voice screen; and if yes, proceed to S806; or if no, proceed to S807.

It may be understood that, in this embodiment of this specification, when the second speaking user interacts with the secondary voice screen, if the vehicle-mounted device detects that there is the third speaking user interacting with the bearer screen at the same time, the vehicle-mounted device needs to determine, according to the preset rule, whether the bearer screen corresponding to the third speaking user and the bearer screen corresponding to the second speaking user are the same secondary voice screen. If the bearer screen corresponding to the third speaking user and the bearer screen corresponding to the second speaking user are the same secondary voice screen, the process proceeds to S806 to display a quantity of persons speaking at the same time on the secondary voice screen. If the bearer screen corresponding to the third speaking user and the bearer screen corresponding to the second speaking user are not the same secondary voice screen, the process proceeds to S807, to be specific, the voice interaction process of the secondary voice screen directly ends after the interaction of the second speaking user ends.

S806: Control the secondary voice screen corresponding to the second speaking user to display the quantity of users speaking at the same time.

It may be understood that, in this embodiment of this specification, if the vehicle-mounted device detects that the bearer screen corresponding to the third speaking user and the bearer screen corresponding to the second speaking user are the same secondary voice screen, a quantity of persons interacting with the secondary voice screen may be displayed on the secondary voice screen, as shown in a display box 2032 in FIG. 5C, so that an interaction process of the second speaking user is not interfered.

In some embodiments, if the vehicle-mounted device detects that the bearer screen corresponding to the third speaking user and the bearer screen corresponding to the second speaking user are the same secondary voice screen, content of interaction with the third speaking user may also be displayed on the secondary voice screen. This is not limited in this specification.

S807: End.

It may be understood that, in this embodiment of this specification, if the vehicle-mounted device detects that the bearer screen corresponding to the third speaking user and the bearer screen corresponding to the second speaking user are not the same secondary voice screen, the voice interaction process of the secondary voice screen corresponding to the second speaking user directly ends after the interaction of the second speaking user ends, and interaction content corresponding to the third speaking user is displayed on the bearer screen corresponding to the third speaking user.

In this way, according to the method in this embodiment of this specification, a plurality of screens can be fully used to provide a voice interaction service for a nearby speaking user, a most convenient screen can be provided for a passenger at each seat, and an advantage of a plurality of screens can be leveraged. In addition, a human-machine interaction service is provided for a plurality of persons without interfering with each other, so that user experience is improved. A method of displaying interaction content of a plurality of persons on a primary voice screen at the same time is compatible with a case in which only one screen is available in an entire vehicle. A method of displaying, on the primary voice screen, an interaction icon of another person may inform a first speaking user that there is another speaking user interacting with another screen in the vehicle. Interaction content of a second speaking user may be directly displayed on a secondary voice screen, and a quantity may be displayed when bearing interaction of the plurality of persons, to ensure that an interaction process of the second speaking user is not interfered. In addition, a voice interaction priority and a screen priority may be determined, and a tendency may be reflected during interaction, to first execute an interaction command that is first received by a vehicle-mounted device, so that confusion of voice interaction in the conventional technology is avoided.

This specification provides an electronic device, including a memory and a processor. The memory is configured to store instructions executed by one or more processors of the electronic device. The processor is one of the one or more processors of the electronic device, and is configured to perform the voice interaction method mentioned in this specification.

This specification provides a vehicle-mounted device, including a memory and a processor. The memory is configured to store instructions executed by one or more processors of the vehicle-mounted device. The processor is one of the one or more processors of the vehicle-mounted device, and is configured to perform the voice interaction method mentioned in this specification.

This specification provides an in-vehicle module, including a processor and a memory. The memory stores a computer program, and the processor executes the computer program, to enable the in-vehicle module to perform the voice interaction method mentioned in this specification.

This specification provides a readable storage medium. The readable storage medium stores instructions. When the instructions are executed on an electronic device, the electronic device is enabled to perform the voice interaction method mentioned in this specification.

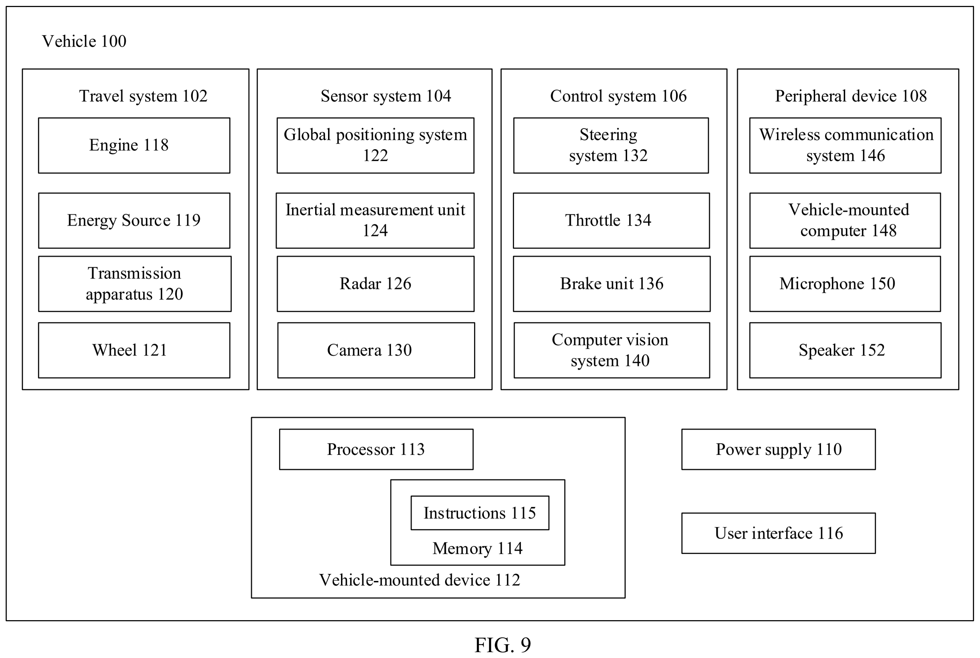

It may be understood that the voice interaction method provided in embodiments of this specification is applicable to any vehicle-mounted device having a voice interaction function. A type and a form of the vehicle-mounted device are not limited in embodiments of this specification. The vehicle-mounted device mentioned in embodiments of this specification may be used in any type of vehicle. As shown in FIG. 9, in this embodiment of this specification, a vehicle 100 is used as an example to describe the vehicle mentioned in this specification.

The vehicle 100 may include various subsystems, for example, a travel system 102, a sensor system 104, a control system 106, one or more peripheral devices 108, a power supply 110, a vehicle-mounted device 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

A part or all functions of the vehicle 100 are controlled by the vehicle-mounted device 112. The vehicle-mounted device 112 may include at least one processor 113. The processor 113 executes instructions 115 stored in a non-transitory computer-readable medium, for example, a memory 114. The vehicle-mounted device 112 may alternatively be a plurality of computing devices that control individual components or subsystems of the vehicle 100 in a distributed manner. It may be understood that, in this embodiment of this specification, the processor may be configured to perform the voice interaction method mentioned in embodiments of this specification.

The memory 114 may include the instructions 115 (for example, program logic), and the instructions 115 may be executed by the processor 113 to perform various functions of the vehicle 100, including the functions described above. The memory 114 may also include additional instructions, including instructions used to send data to, receive data from, interact with, and/or control one or more of the travel system 102, the sensor system 104, the control system 106, and the peripheral device 108.

The vehicle-mounted device 112 may control functions of the vehicle 100 based on inputs received from various subsystems (for example, the travel system 102, the sensor system 104, and the control system 106) and the user interface 116. In some embodiments, the vehicle-mounted device 112 may provide control over many aspects of the vehicle 100 and the subsystems of the vehicle 100.

In some embodiments, the vehicle-mounted device may alternatively be a device including another vehicle-mounted component, for example, including a plurality of displays, a sound sensor, and the like. In some embodiments, the vehicle-mounted device may alternatively not include another vehicle-mounted component. For example, the vehicle may include a display, a sound sensor, and the like, and the vehicle-mounted device may control various components, such as the display and the sound sensor, in the vehicle.

The travel system 102 may include a component that provides power for the vehicle 100 to move. In some embodiments, the travel system 102 may include an engine 118, an energy source 119, a transmission apparatus 120, and a wheel 121. The engine 118 may be an internal combustion engine, a motor, an air compression engine, or a combination of other types of engines, for example, a hybrid engine including a gasoline engine and a motor, or a hybrid engine including an internal combustion engine and an air compression engine. The engine 118 converts the energy source 119 into mechanical energy.

Examples of the energy source 119 include gasoline, diesel, another petroleum-based fuel, propane, another compressed gas-based fuel, ethanol, a solar panel, a battery, and another power source. The energy source 119 may also provide energy for another system of the vehicle 100.

The transmission apparatus 120 may transmit mechanical power from the engine 118 to the wheel 121. The transmission apparatus 120 may include a transmission, a differential, and a drive shaft. In some embodiments, the transmission apparatus 120 may further include another component, for example, a clutch. The drive shaft may include one or more shafts that may be coupled to one or more wheels 121.

The sensor system 104 may include several sensors that sense information about an ambient environment of the vehicle 100. For example, the sensor system 104 may include a global positioning system 122 (the global positioning system may be a global positioning system (global positioning system, GPS), a BeiDou system, or another positioning system), an inertial measurement unit (inertial measurement unit, IMU) 124, a radar 126, and a camera 130. The sensor system 104 may further include a sensor (for example, a vehicle-mounted air quality monitor, a fuel gauge, or an oil temperature gauge) of an internal system of the monitored vehicle 100. Sensor data from one or more of these sensors may be used to perform detection on an object and corresponding features (a location, a shape, a direction, a speed, and the like) of the object. Such detection and recognition are key functions of safe operation of the vehicle 100.

The global positioning system 122 may be configured to estimate a geographical location of the vehicle 100. The IMU 124 is configured to sense location and orientation changes of the vehicle 100 based on inertial acceleration. In some embodiments, the IMU 124 may be a combination of an accelerometer and a gyroscope.

The radar 126 may sense an object in the ambient environment of the vehicle 100 by using a radio signal, an optical signal, or a laser signal.

The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various elements, including a steering system 132, a throttle 134, a brake unit 136, and a computer vision system 140.

The steering system 132 may be operated to adjust a forward direction of the vehicle 100. For example, in some embodiments, the steering system 132 may be a steering wheel system.

The throttle 134 is configured to control an operating speed of the engine 118 and further control a speed of the vehicle 100.

The brake unit 136 is configured to control the vehicle 100 to decelerate. The brake unit 136 may slow down the wheel 121 by using friction. In some other embodiments, the brake unit 136 may convert kinetic energy of the wheel 121 into a current. The brake unit 136 may alternatively reduce a rotational speed of the wheel 121 in another manner, to control the speed of the vehicle 100.

The computer vision system 140 may be operated to process and analyze the image captured by the camera 130, to recognize an object and/or a feature in the ambient environment of the vehicle 100. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to draw a map for an environment, track an object, estimate a speed of the object, and the like.

The vehicle 100 interacts with an external sensor, another vehicle, another computer system, or a user through the peripheral device 108. The peripheral device 108 may include a wireless communication system 146, a vehicle-mounted computer 148, a microphone 150, and/or a speaker 152.

In some embodiments, the peripheral device 108 provides a means for the user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform an operation through a touchscreen. In another case, the peripheral device 108 may provide a means for the vehicle 100 to communicate with another device in the vehicle. For example, the microphone 150 may receive audio (for example, a voice command or another audio input) from the user of the vehicle 100. Similarly, the speaker 152 may output audio to the user of the vehicle 100.

The wireless communication system 146 may wirelessly communicate with one or more devices directly or via a communication network. For example, the wireless communication system 146 may use 4G cellular communication, for example, a long term evolution (long term evolution, LTE) system or a universal mobile telecommunications system (universal mobile telecommunications system, UMTS). The wireless communication system 146 may perform communication via a wireless local area network (wireless local area network, WLAN). In some embodiments, the wireless communication system 146 may directly communicate with a device through an infrared link or Bluetooth.

The power supply 110 may provide power for various components of the vehicle 100. In an embodiment, the power supply 110 may be a rechargeable lithium-ion or lead-acid battery. One or more battery groups of such a battery may be configured as the power supply 110 to provide power for various components of the vehicle 100. In some embodiments, the power supply 110 and the energy source 119 may be implemented together.

The user interface 116 is configured to provide information for or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

Embodiments disclosed in this specification may be implemented in hardware, software, firmware, or a combination of these implementations. Embodiments of this specification may be implemented as a computer program or program code executed in a programmable system. The programmable system includes at least one processor, a storage system (including a volatile memory and a non-volatile memory and/or a storage element), at least one input device, and at least one output device.

Program code may be used to input instructions, to perform functions described in this specification and generate output information. The output information may be applied to one or more output devices in a known manner. For a purpose of this specification, a processing system includes any system having a processor, for example, a digital signal processor, a microcontroller, an application-specific integrated circuit, or a microprocessor.

The program code may be implemented in a high-level programming language or an object-oriented programming language to communicate with the processing system. The program code may alternatively be implemented in an assembly language or a machine language when required. Actually, the mechanism described in this specification is not limited to a scope of any specific programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed via a network or through another computer-readable medium. Therefore, the machine-readable medium may include any mechanism for storing or transmitting information in a machine-readable (for example, a computer-readable) form, including but not limited to a floppy disk, a compact disc, an optical disc, a magneto-optical disc, a read-only memory (Read-Only Memory, ROM), a random access memory (Random Access Memory, RAM), a magnetic card, an optical card, an erasable programmable read-only memory (Erasable Programmable Read-Only Memory, EPROM), a flash memory, an electrically erasable programmable read-only memory (Electrically-Erasable Programmable Read-Only Memory, EEPROM), or a tangible machine-readable memory for transmitting information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting an electronic instruction or information in a machine-readable (for example, computer-readable) form.

In the accompanying drawings, some structural or method features may be shown in a specific arrangement and/or sequence. However, it should be understood that such a specific arrangement and/or sequence may not be required. In some embodiments, these features may be arranged in a manner and/or a sequence different from those/that shown in the descriptive accompanying drawings. In addition, inclusion of the structural or method features in a specific figure does not imply that such features are required in all embodiments, and in some embodiments, these features may not be included or may be combined with another feature.

It should be noted that units/modules mentioned in the device embodiments of this specification are all logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolving the technical problem provided in this specification. In addition, to highlight an innovative part of this specification, a unit/module that is not closely related to resolving the technical problem provided in this specification is not introduced in the foregoing device embodiments of this specification. This does not mean that there are no other units/modules in the foregoing device embodiments.

It should be noted that, in the examples and the specification of this patent, relational terms such as first and second are merely used to distinguish one entity or operation from another entity or operation, and do not necessarily require or imply any such actual relationship or sequence between these entities or operations. Moreover, the terms "include", "comprise", or any other variants thereof is intended to cover non-exclusive inclusion, so that a process, a method, an article, or a device that includes a list of elements includes those elements, and further includes other elements that are not expressly listed, or further includes elements inherent to this process, method, article, or device. Without further limitations, an element limited by "include a/an" does not exclude another same element existing in the process, method, article, or device that includes the element.

Although this specification has been illustrated and described with reference to some preferred embodiments of this specification, a person of ordinary skill in the art should understand that various changes may be made to this specification in form and detail without departing from the scope of this application.

## Claims

1. A voice interaction method, comprising:
detecting a first voice command of a first user;
determining a screen corresponding to a first location of the first user in a vehicle as a first screen, determining the first screen as a primary voice screen, and displaying, through the first screen, a first voice interaction interface corresponding to the first voice command;
detecting a second voice command issued by a second user; and
determining a screen corresponding to a second location of the second user in the vehicle as a second screen, determining the second screen as a secondary voice screen, displaying, through the second screen, a second voice interaction interface corresponding to the second voice command, and displaying a first interaction identifier on the first voice interaction interface, wherein the first interaction identifier indicates that the second user is currently interacting with the second screen.

2. The method according to claim 1, wherein the first interaction identifier comprises at least one of an interaction icon, a quantity of interacting persons, and an interaction location.

3. The method according to claim 1, wherein the first voice interaction interface displays interaction content corresponding to the first voice command, and the second voice interaction interface displays interaction content corresponding to the second voice command.

4. The method according to claim 1, wherein detecting the second voice command issued by the second user comprises: in a process of receiving the first voice command, detecting the second voice command issued by the second user.

5. The method according to any one of claims 1 to 4, wherein the method further comprises:
in the process of receiving the first voice command, detecting a third voice command issued by a third user; and
in response to a screen corresponding to a third location of the third user in the vehicle being the first screen, displaying, by the first voice interaction interface, interaction content corresponding to the third voice command.

6. The method according to any one of claims 1 to 4, wherein the method further comprises:
in a process of receiving the second voice command, detecting a fourth voice command issued by a fourth user; and
in response to a screen corresponding to a fourth location of the fourth user in the vehicle being the second screen, displaying, by the second voice interaction interface, a second interaction identifier, wherein the second interaction identifier indicates a quantity of persons interacting with the second screen.

7. The method according to claim 6, wherein the method further comprises:
further displaying, by the second voice interaction interface, interaction content corresponding to the fourth voice command.

8. The method according to claim 1, wherein the method further comprises:
displaying, by the second voice interaction interface, a third interaction identifier, wherein the third interaction identifier indicates that the first user is currently interacting with the first screen.

9. The method according to any one of claims 1 to 8, wherein the method comprises:
determining the first location of the first user in the vehicle based on a sound source location of the first voice command, and determining the second location of the second user in the vehicle based on a sound source location of the second voice command; and
based on a preset relationship between a location and a screen, determining the screen corresponding to the first location as the first screen corresponding to the first user, and determining the screen corresponding to the second location as the second screen corresponding to the second user.

10. The method according to any one of claims 1 to 8, wherein if the screen corresponding to the first location of the first user in the vehicle is determined as a third screen, and the third screen is in an exception state, a replacement screen corresponding to the third screen is determined, according to a preset screen replacement rule, as the first screen corresponding to the first user.

11. The method according to any one of claims 1 to 8, wherein command processing for the first voice command takes precedence over command processing for the second voice command; and
the command processing comprises at least one of broadcast processing, response processing, and execution processing.

12. An electronic device, comprising a memory and a processor, wherein the memory is configured to store instructions executed by one or more processors of the electronic device, and the processor is one of the one or more processors of the electronic device, and is configured to perform the voice interaction method according to any one of claims 1 to 11.

13. A vehicle-mounted device, comprising a memory and a processor, wherein the memory is configured to store instructions executed by one or more processors of the vehicle-mounted device, and the processor is one of the one or more processors of the vehicle-mounted device, and is configured to perform the voice interaction method according to any one of claims 1 to 11.

14. An in-vehicle module, comprising a processor and a memory, wherein the memory stores a computer program, and the processor executes the computer program, to enable the in-vehicle module to perform the voice interaction method according to any one of claims 1 to 11.

15. A readable storage medium, wherein the readable medium stores instructions, and when the instructions are executed on an electronic device, the electronic device is enabled to perform the voice interaction method according to any one of claims 1 to 11.
